# EUROPEAN PATENT SPECIFICATION

(11) **EP 1 440 943 B1**
(45) Date of publication and mention of the grant of the patent: **11.07.2007**
(21) Application number: 04250177.5
(22) Date of filing: 15.01.2004
(51) Int. Cl.: C02F 3/02, C02F 3/12, C02F 11/02

(54) **Wastewater treatment apparatus**
Abwasserbehandlungsvorrichtung
Appareil de traitement d'eaux usées

(30) Priority: 17.01.2003 GB 0301092
(43) Date of publication of application: 28.07.2004
(73) Proprietor: WICKINS, Jeremy, Burgess Hill, Sussex RH15 8AF (GB)
(72) Inventor: WICKINS, Jeremy, Burgess Hill, Sussex RH15 8AF (GB)
(74) Representative: Crouch, David John

(56) References cited:
- DE-A1- 10 214 305
- US-A- 3 674 687
- US-A- 5 554 299
- PATENT ABSTRACTS OF JAPAN vol. 011, no. 251 (C-440), 14 August 1987 (1987-08-14) & JP 62 057694 A (HITACHI LTD), 13 March 1987 (1987-03-13)

## Description

The present invention relates to wastewater treatment apparatus comprising at least one pre-tank and a reactor tank between which a transfer connection is provided to enable wastewater to be transferred from the or each pre-tank to the reactor tank, and in which the reactor tank is provided with a biomass and aeration equipment to enable the wastewater to be treated in the reactor tank.

Such apparatus is disclosed in US-A-3,674,687 and also in DE 102 14 305A.

It is established practice in the water industry to determine the capacity of the apparatus for dealing with storm conditions in terms of the flow the apparatus has to deal with in dry weather. Thus, to deal with storm conditions, the apparatus is further provided with storm tanks, and overflows or weirs are provided to feed excess flow to these storm tanks. Normally, at least two storm tanks are provided, with the second storm tank beginning to fill after the first has been filled. This increases the likelihood that solids will settle in these storm tanks. However, in the event that the storm tanks cannot cope with the storm conditions, ultimately water overflows from the second storm tank through a screen and into a river or stream. Typically, the storm tanks are required to be capable of containing the amount of wastewater that flows at, say, three times the dry weather flow for a period of at least two hours.

After the storm subsides, the contents of the storm tanks are passed back to the apparatus for treatment, with scraping equipment in the storm tanks to scrape solids settled off the bottom, also to be returned to the treatment apparatus. This also requires odour control in addition to duty stand-by of all the pumps and equipment.

The provision of storm tanks, scraping equipment and odour control all increase the cost of the apparatus.

The present invention seeks to provide a remedy.

Accordingly, the present invention is directed to wastewater treatment apparatus having the construction set out in the accompanying claim 1.

This enables one tank to be isolated from the rest of the apparatus and serviced whilst the other pre-tank remains in operation, which in turn enables the apparatus to be serviced without being shut down. In the event of storm conditions, the inlet to one of the pre-tanks may then be closed so that the flow is directed into only one of the pre-tanks for initial settlement. Once that tank cannot accommodate further flow, both shut-off valves of the outlets can be opened to enable fluid to flow into the other of the pre-tanks before, ultimately, excess flow flows out through the storm overflow.

Preferably, each pre-tank is provided with a stirrer. This provides the means to maintain a degree of homogeneity of the wastewater in non-storm conditions. Instead of or in addition to the stirrer there may be provided aeration equipment in each pre-tank.

At least one of the pre-tanks may be provided with a level sensor to switch-off such a stirrer and/or aeration equipment once the level of the wastewater in that tank rises above a predetermined level.

This increases the likelihood that solids will settle in the or each pre-tank in storm conditions. The position at which the transfer connection opens into the pre-tank may be provided with a cover to reduce the turbulence of fluid within that tank, so that it is not unduly unsettled in storm conditions, when transfer takes place.

Each cover may comprise a plate.

The storm overflow may comprise a weir as a simple means of dealing with excess wastewater.

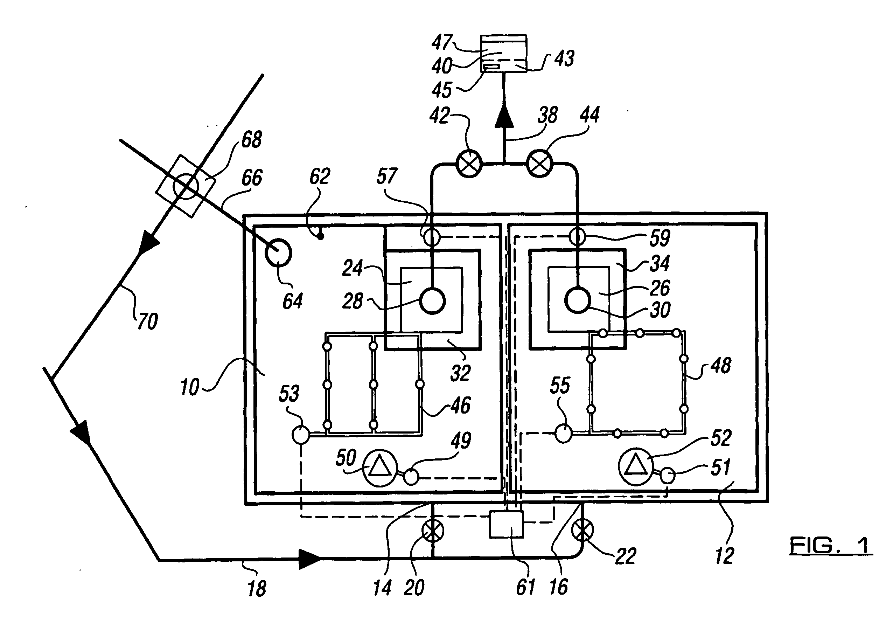

An example of wastewater treatment apparatus embodying the present invention will now be described with reference to the accompanying drawing, the only figure of which shows the apparatus in diagrammatic plan form.

The apparatus shown in the only figure of the drawings comprises two pre-tanks 10 and 12 provided with respective inlets 14 and 16 connected to a common feed line 18 via respective shut-off valves 20 and 22. At the base of each pre-tank 10 and 12 there is a sump 24 and 26 respectively leading to respective outlets 28 and 30. The sump and the outlets are covered by respective cover plates 32 and 34 with a relatively small spacing between the plates and the base of the pre-tanks 10 and 12. The outlets 28 and 30 are in turn reconnected to a common transfer line 38 to a reactor tank 40 via respective shut-off valves 42 and 44.

The reactor tank 40 is provided with a biomass 43 and aeration equipment 45 to enable wastewater 47 in the reactor tank 40 to be treated therein.

The base of each pre-tank 10 and 12 is provided with an aerator 46 and 48, respectively, and also a mechanical stirrer 50 and 52, respectively. The stirrers are provided with respective motors 49 and 51. Pumps 53 and 55 are also provided for each aerator 46 and 48 to pump air therethrough and pumps 57 and 59 are also provided to pump wastewater from each pre-tank 10 and 12 to the transfer line 38.

Control of the motors and pumps is determined by a microprocessor 61. In addition, the output of a level sensor 62 provided in the pre-tank 10 is connected to that processor.

An overflow weir 64 is provided at a higher level in the pre-tank 10. This discharges wastewater via a discharge line 66 and a screen 68 to a river or stream 70.

Under normal conditions of flow, for example in dry weather conditions, wastewater is fed by the feed line 18 to the pre-tanks 10 and 12 via the inlets 14 and 16. The wastewater in these pre-tanks is continually moved around by the stirrer 50 and 52 and the aerators 46 and 48. Under a pre-selective regime, the microprocessor 61 causes the appropriate pump to operate to transfer wastewater from the pre-tanks 10 and 12 to the reactor tank 40.

In the event that the pre-tanks require servicing and cleaning, one of them is isolated by shutting off its inlet and outlet shut-off valve, whilst the other continues to operate. Normally, however, both shut-off valves 42 and 44 are open so that the wastewater is balanced equally between the two pre-tanks 10 and 12.

During storm conditions, wastewater rises in the pre-tanks 10 and 12 at a rate faster than the transfer of wastewater to the reactor tank 40. Once the level exceeds that determined by the sensor 62, the signal to the microprocessor 61 causes the stirrers 50 and 52 and the aerators 46 and 48 to be stopped so that they no longer stir up solids in the tanks. As a result, as the water level in the pre-tanks rises, sludge and solids more easily settle in these tanks. Sludge is removed from the pre-tanks under at intervals the normal treatment regime via the transfer line 38 to the reactor 40. The cover plates 32 and 34 reduce the turbulence caused when sludge is drawn off from the pre-tanks 10 and 12 to the reactor tank 40, reducing the extent to which the sludge and solids which remain in the pre-tanks during storm conditions are disturbed.

In the event that the storm conditions persist, ultimately water flows out of the pre-tank 10 into the river 70 via the line 66 and the screen 68. The latter prevents undesirable solids entering into the river or stream. At the same time, shut-off valves 42 and 44 remain open so that the levels in the pre-tanks 10 and 12 remain substantially equal.

It will be appreciated that as a result of the construction of the illustrated apparatus, no additional storm tanks are required, and no cleaning or scraping of any such storm tanks is required.

Many modifications and variations to the illustrated apparatus may occur to the reader without taking it outside the scope of the present invention. To give one example only, each pre-tank 10 and 12 could be provided with its respective overflow weir 64.

## Claims

1. Wastewater treatment apparatus comprising two pre-tanks (10 and 12) and a reactor tank (40) between which a transfer connection (28, 30, 38) is provided to enable wastewater to be transferred from each pre-tank (10) to the reactor tank (40), in which the two pre-tanks (10 and 12) are connected together via the transfer connection (28, 30, 38), and in which the reactor tank (40) is provided with a biomass (43) and aeration equipment (45) to enable the wastewater to be treated in the reactor tank (40), in which at least one of the pre-tanks (10) is provided with a storm overflow (64), whereby even in storm conditions the reactor tank (40) remains effective and settled solids from the storm flow in the pre-tanks (10 and 12) are transferred at intervals to the reactor tank (40), and in the event of persistence of the storm conditions, excess wastewater is released via the storm overflow (64) without interrupting operation of the reactor tank (40), **characterised in that** the two pre-tanks (10 and 12) are provided with respective inlets (14 and 16), each with its own shut-off valve (20, 22), as well as two outlets (28, 30) of the transfer connection (28, 30, 38) also with respective shut-off valves (42, 44).

2. Wastewater treatment apparatus according to claim 1, **characterised in that** each pre-tank (10, 12) is provided with a stirrer (50).

3. Wastewater treatment apparatus according to claim 1 or claim 2, **characterised in that** aeration equipment (45) is provided in each pre-tank (10, 12).

4. Wastewater treatment apparatus according to claim 2 or claim 3, **characterised in that** at least one of the pre-tanks (10) is provided with a level sensor (62) to switch-off such a stirrer (50) and/or aeration equipment (45) once the level of the wastewater **in that** tank (10) rises above a predetermined level.

5. Wastewater treatment apparatus according to any preceding claim, **characterised in that** the position at which the transfer connection (28, 30, 38) opens into each pre-tank (10, 12) is provided with a cover (32) to reduce the turbulence of fluid within that tank (10, 12), so that it is not unduly unsettled in storm conditions, when transfer takes place.

6. Wastewater treatment apparatus according to claim 5, **characterised in that** each cover comprises a plate (32).

7. Wastewater treatment apparatus according to any preceding claim, **characterised in that** the storm overflow comprises a weir (64).

## Patentansprüche

1. Abwasserbehandlungsanlage umfassend zwei Vortanks (10 und 12) und einen Reaktortank (40) zwischen denen eine Übertragungsverbindung (28, 30, 38) angeordnet ist, die es ermöglicht, Abwasser aus jedem Vortank (10) zum Reaktortank (40) zu übertragen, wobei die beiden Vortanks (10 und 12) miteinander über die Übertragungsverbindung (28, 30, 38) verbunden sind, und wobei der Reaktortank (40) mit einer Biomasse (43) und Belüftungsvorrichtung (45) ausgerüstet ist, um es zu ermöglichen, das Abwasser in dem Reaktortank (40) zu behandeln, wobei wenigstens einer der Vortanks (10) mit einem Unwetterüberlauf (64) ausgestattet ist, wobei der Reaktortank (40) sogar unter Unwetterbedingungen betriebsbereit bleibt und abgelagerte Feststoffe aus dem Unwetterstrom in den Vortanks (10 und 12) in Intervallen zum Reaktortank (40) geleitet werden, und im Falle eines Anhaltens der Unwetterbedingungen überschüssiges Abwasser über den Unwetterüberlauf (64) abgelassen wird, ohne den Betrieb des Reaktortanks (40) zu unterbrechen, **dadurch gekennzeichnet, dass** die beiden Vortanks (10 und 12) jeweils mit Zuläufen (14 und 16), jeder davon mit einem eigenen Absperrventil (20, 22), sowie mit zwei Auslässen (28, 30) der Übertragungsverbindung (28, 30, 38), ebenfalls jeweils mit Absperrventilen (42, 44), ausgestattet sind.

2. Abwasserbehandlungsanlage nach Anspruch 1, **dadurch gekennzeichnet, dass** jeder Vortank (10, 12) mit einem Rührorgan (50) ausgestattet ist.

3. Abwasserbehandlungsanlage nach Anspruch 1 oder 2, **dadurch gekennzeichnet, dass** eine Belüftungsvorrichtung (45) in jedem Vortank (10, 12) vorgesehen ist.

4. Abwasserbehandlungsanlage nach Anspruch 2 oder 3, **dadurch gekennzeichnet, dass** wenigstens einer der Vortanks (10) mit einem Füllstandssensor (62) ausgestattet ist, um das Rührorgan (50) und/oder die Belüftungsvorrichtung (45) abzuschalten, wenn die Höhe des Abwassers in dem Behälter (10) einmal eine vorbestimmte Höhe übersteigt.

5. Abwasserbehandlungsanlage nach einem der vorherigen Ansprüche, **dadurch gekennzeichnet, dass** die Position, an welcher sich die Übertragungsverbindung (28, 30, 38) in jedem Vortank (10, 12) öffnet, mit einer Abdeckung (32) ausgestattet ist, um die Turbulenz des Fluids in dem Tank (10, 12) zu reduzieren, so dass es unter Unwetterbedingungen nicht übermäßig unruhig wird, wenn ein Überleiten stattfindet.

6. Abwasserbehandlungsanlage nach Anspruch 5, **dadurch gekennzeichnet, dass** jede Abdeckung eine Platte (32) umfasst.

7. Abwasserbehandlungsanlage nach einem der vorherigen Ansprüche, **dadurch gekennzeichnet, dass** der Unwetterüberlauf ein Wehr (64) umfasst.

## Revendications

1. Appareil de traitement d'eaux usées, comprenant deux réservoirs préliminaires (10 et 12) et un réservoir de réacteur (40), entre lesquels est prévue une connexion de transfert (28, 30, 38) afin de permettre à de l'eau usée d'être transférée depuis chaque réservoir préliminaire (10) vers le réservoir de réacteur (40), dans lequel les deux réservoirs préliminaires (10 et 12) sont connectés ensemble via la connexion de transfert (28, 30, 38) et dans lequel le réservoir de réacteur (40) est muni d'une biomasse (43) et d'un équipement d'aération (45), pour permettre à l'eau usée d'être traitée dans le réservoir de réacteur (40), dans lequel au moins l'un des réservoirs préliminaires (10) est muni d'un déversoir d'orage (64), de manière que, même dans des conditions d'orage, le réservoir de réacteur (40) reste efficace et que les solides déposés de l'écoulement d'orage dans les réservoirs préliminaires (10 et 12) soient transférés à intervalles vers le réservoir de réacteur (40) et que, dans l'éventualité de persistance des conditions d'orage, les eaux usées en excès soient relâchées via le déversoir d'orage (64) sans interrompre le fonctionnement du réservoir de réacteur (40), **caractérisé en ce que** les deux réservoirs préliminaires (10 et 12) sont munis d'entrées (14 et 16) respectives, chacune ayant sa propre soupape d'isolement (20, 22), ainsi que de deux sorties (28, 30) de connexion de transfert (28, 30, 38), également avec des soupapes d'isolement (42, 44) respectives.

2. Appareil de traitement d'eaux usées selon la revendication 1, **caractérisé en ce que** chaque réservoir préliminaire (10, 12) est muni d'un agitateur (50).

3. Appareil de traitement d'eaux usées selon la revendication 1 ou la revendication 2, **caractérisé en ce qu'**un équipement d'aération (45) est prévu dans chaque réservoir préliminaire (10, 12).

4. Appareil de traitement d'eaux usées selon la revendication 2 ou la revendication 3, **caractérisé en ce qu'**au moins l'un des réservoirs préliminaires (10) est muni d'un capteur de niveau (62), pour mettre hors service un tel agitateur (50) et/ou équipement d'aération (45), une fois que le niveau des eaux usées dans ce réservoir (10) monte au-dessus d'un niveau prédéterminé.

5. Appareil de traitement d'eaux usées selon l'une quelconque des revendications précédentes, **caractérisé en ce que** la position à laquelle la connexion de transfert (28, 30, 38) s'ouvre dans chaque réservoir préliminaire (10, 12) est munie d'un couvercle (32), pour réduire la turbulence de fluide à l'intérieur de ce réservoir (10, 12), de manière à ne pas indument provoquer de perturbations de décantation dans des conditions d'orage, lorsque le transfert se produit.

6. Appareil de traitement d'eaux usées selon la revendication 5, **caractérisé en ce que** chaque couvercle comprend une plaque (32).

7. Appareil de traitement d'eaux usées selon l'une quelconque des revendications précédentes, **caractérisé en ce que** le déversoir d'orage comprend un barrage-déversoir (64) .
